# EUROPÄISCHE PATENTSCHRIFT

(11) **EP 2 974 998 B1**
(45) Veröffentlichungstag und Bekanntmachung des Hinweises auf die Patenterteilung: **31.12.2025**
(21) Anmeldenummer: 15177263.9
(22) Anmeldetag: 17.07.2015
(51) Int. Cl.: B67C 3/00, B67C 3/28, G05D 7/06

(54) **VERFAHREN UND VORRICHTUNG ZUM BEFÜLLEN EINES BEHÄLTERS MIT EINEM FÜLLPRODUKT**
METHOD AND DEVICE FOR FILLING A CONTAINER WITH A FILL PRODUCT
DISPOSITIF ET PROCEDE DE REMPLISSAGE D'UN RECIPIENT AVEC UN PRODUIT DE REMPLISSAGE

(30) Priorität: 18.07.2014 DE 102014110159
(43) Veröffentlichungstag der Anmeldung: 20.01.2016
(73) Patentinhaber: Krones AG, 93073 Neutraubling (DE)
(72) Erfinder: ANGERER, Florian, 93073 Neutraubling (DE); DOBLINGER, Josef, 93073 Neutraubling (DE)
(74) Vertreter: Nordmeyer, Philipp Werner

(56) Entgegenhaltungen:
- EP-A1- 1 762 539
- EP-A1- 1 897 848
- EP-A1- 2 915 775
- WO-A1-2004/051200
- WO-A1-2008/126119
- US-A1- 2014 190 571

## Beschreibung

### Technisches Gebiet

Die vorliegende Erfindung betrifft ein Verfahren sowie eine Vorrichtung zum Befüllen eines Behälters mit einem Füllprodukt mittels eines stufenlos öffenbaren Füllventils in Kombination mit einer Vorrichtung zur Bestimmung eines Ist-Volumenstroms.

### Stand der Technik

Aus dem Stand der Technik sind Verfahren zum Befüllen eines Behälters mit einem Füllprodukt bekannt, bei welchen mittels eines Füllorgans das Füllprodukt dem jeweiligen, zu befüllenden Behälter zugeführt wird. Dabei ist bekannt, den Volumenstrom des Füllprodukts in den zu befüllenden Behälter über die Fülldauer hinweg zu variieren. Hierbei ist beispielsweise bekannt, zu Beginn des Füllvorganges mit einem geringen Volumenstrom abzufüllen, um beispielsweise eine anfängliche Aufschäumneigung eines Füllproduktes aufgrund der hohen Fallhöhe in den zu befüllenden Behälter sowie dem Auftreffen des Füllprodukts auf dem Behälterboden zu reduzieren. Nachfolgend wird bei einem solchen Befüllvorgang der Volumenstrom maximiert, um eine möglichst zügige Befüllung des zu befüllenden Behälters zu erreichen. Ab einer bestimmten Füllhöhe, einer bestimmten Füllzeit oder einem bestimmten abgefüllten Füllvolumen wird der in den Behälter eingeführte Volumenstrom dann wieder reduziert, um sowohl die Aufschäumneigung zu reduzieren als auch das exakte Erreichen des Füllendes zu unterstützen. Der Füllvorgang endet dann - abhängig vom jeweiligen Füllverfahren - beim Erreichen einer bestimmten Füllhöhe in dem zu befüllenden Behälter, beim Erreichen eines bestimmten Füllgewichts, beim Erreichen einer bestimmten Füllzeit oder beim Erreichen eines bestimmten Füllvolumens. Die hierfür verwendeten Abschaltmechanismen sind prinzipiell bekannt.

Zum Befüllen von Behältern mit einem Füllprodukt, beispielsweise in einer Getränkeabfüllanlage, ist es bekannt, Füllorgane zu verwenden, welche üblicherweise oberhalb der zu befüllenden Behälter angeordnet sind und welche mittels eines Produktventils unter anderem den Volumenstrom in den Behälter steuern. Ein Produktventil, welches beispielsweise in einem Füllorgan aufgenommen ist, umfasst üblicherweise einen relativ zu einem Ventilsitz beweglichen Ventilkörper, welcher, wenn er fest im Ventilsitz aufgenommen ist, den Durchfluss des Füllproduktes blockiert und welcher, wenn er aus dem Ventilsitz herausgehoben ist, ein Herausströmen des über dem Produktventil anstehenden Füllproduktes ermöglicht.

Die Bewegung des Ventilkörpers relativ zum Ventilsitz wird üblicherweise pneumatisch angesteuert. Die bekannten pneumatischen Antriebe lassen dabei lediglich zwei Schaltstellungen zu, nämlich eine vollständig geschlossene und eine vollständig geöffnete Schaltstellung. Entsprechend kann der in den Behälter einströmende Volumenstrom nur entweder eingeschaltet oder ausgeschaltet werden. Die Variation des Volumenstroms beim Einfüllen des Füllprodukts in den zu befüllenden Behälter kann beispielsweise über ein dem eigentlichen Füllventil vorgeschaltetes Drosselventil durchgeführt werden. Mittels dieses vorgeschalteten Drosselventils kann der Volumenstrom entsprechend zu dem über einen Soll-Volumenstrom vorgegebenen Schaltpunkten gedrosselt oder erhöht werden.

Alternativ ist es zur Variation des Volumenstroms bekannt, ein Füllventil bereitzustellen, welches im Wesentlichen stufenlos öffenbar ist. Auf diese Weise kann durch eine stufenlose Variation der Öffnung des Füllventils selbst eine Variation des in den zu befüllenden Behälter fließenden Volumenstroms erreicht werden. Ein solches stufenlos öffenbares Füllventil ermöglicht eine Proportionalregelung des Durchflusses, insbesondere wenn es mit einem Durchflussmesser gekoppelt ist. Mittels des Durchflussmessers wird der Ist -Volumenstrom gemessen und über eine Regelung das stufenlos öffenbare Füllventil auf die durch einen Soll-Volumenstrom vorgegebenen Volumenströme ausgeregelt.

Die EP 1 762 539 A1 beschreibt ein Verfahren und eine Einrichtung zum Füllen von Behältern mit einer bestimmten Flüssigkeitsmenge. Die EP 2 915 775 A1, veröffentlich nach dem Prioritätstag der vorliegenden Anmeldung, beschreibt eine Vorrichtung und ein Verfahren zum Befüllen eines Behälters mit einem Füllprodukt. Die WO 2004/051200 A1 beschreibt ein Verfahren zur Nachlaufmengenregelung bei Abfüllanlagen. Die WO 2008/126119 A1 beschreibt ein Füllventil und ein Verfahren zum Befüllen eines Behälters.

### Darstellung der Erfindung

Ausgehend von dem bekannten Stand der Technik ist es eine Aufgabe der vorliegenden Erfindung, ein Verfahren sowie eine Vorrichtung zum Befüllen eines Behälters mit einem Füllprodukt anzugeben, welches ein weiter verbessertes Füllverhalten zeigt.

Diese Aufgabe wird durch ein Verfahren mit den Merkmalen des Anspruchs 1 gelöst. Vorteilhafte Weiterbildungen ergeben sich aus den Unteransprüchen.

Entsprechend wird ein Verfahren zum Befüllen eines Behälters mit einem Füllprodukt mittels eines stufenlos verstellbaren Füllventils und einer Vorrichtung zum Bestimmen eines Ist-Volumenstroms vorgeschlagen, wobei ein Soll-Volumenstrom vorgegeben ist. Erfindungsgemäß wird für einen vorgegebenen Wert des Soll-Volumenstroms eine vorgespeicherte Öffnungsposition des Füllventils angesteuert, wobei die vorgespeicherte Öffnungsposition durch einen vorhergehenden Regelungsvorgang für den vorgegebenen Soll-Volumenstrom ermittelt wurde.

Dadurch, dass für einen vorgegebenen Wert des Soll-Volumenstroms eine vorgespeicherte Öffnungsposition angesteuert wird, kann der Ist-Volumenstrom den Soll-Volumenstrom schneller erreichen, ohne dass ein übermäßiges Überschwingen bei dem stufenlos verstellbaren Füllventil auftritt. Insbesondere kann das Überschwingen, welches bei einem reinen Regelvorgang auftreten würde, durch das Ansteuern der vorgespeicherten Öffnungsposition verringert oder gar eliminiert werden. Mittels der vorgespeicherten Öffnungsposition kann das Füllventil deshalb so schnell auf eine Öffnungsposition bewegt werden, die mit dem Soll-Volumenstrom korrelliert, weil die vorgespeicherte Öffnungsposition in einem vorhergehenden Regelungsvorgang ermittelt wurde und entsprechend für dieses individuelle Füllventil und für die jeweiligen Umgebungsbedingungen erreicht wurde.

Auf diese Weise ist es möglich, die Öffnungsposition des Füllventils, welche in einem vorhergehenden Füllvorgang bereits über einen Regelkreis umfassend die Vorrichtung zum Bestimmen des Ist-Volumenstroms erreicht wurde, in einem, mehreren oder allen nachfolgenden Füllvorgängen als vorgespeicherte Öffnungsposition anzufahren. Entsprechend kann das Füllventil sofort die Öffnungsposition anfahren, welche in dem vorhergehenden Füllvorgang als dem Soll-Volumenstrom möglichst nahekommende Öffnungsposition ermittelt wurde. Damit kann sich ein konstanter Volumenstrom, welcher dem Soll-Volumenstrom entspricht, entsprechend schnell einstellen beziehungsweise in einem anschließenden Regelvorgang erreicht werden.

Bevorzugt wird als vorgespeicherte Öffnungsposition diejenige Öffnungsposition gespeichert, welche im vorherigen Regelungsvorgang direkt vor einer Veränderung des Werts des Soll-Volumenstroms erreicht wurde. Hierdurch wird erreicht, dass der Regelvorgang bestmöglich ausgeschwungen ist und entsprechend die vorgespeicherte Öffnungsposition bestmöglich dem vorgegebenen Soll-Volumenstrom entspricht.

Als bevorzugte Weiterbildung kann die vorgespeicherte Öffnungsposition als Mittelwert der Öffnungspositionen für einen vorgegebenen Soll-Volumenstrom bestimmt werden, um etwaige Schwingungen am Ende des Regelvorgangs zu eliminieren. Besonders bevorzugt wird der Mittelwert dabei über einen vorgegebenen Abschnitt des Soll-Volumenstroms, bevorzugt einen vorgegebenen Zeitabschnitt, berechnet, um eine unterschiedliche Gewichtung unterschiedlicher Regelabschnitte zu erreichen. Diese Möglichkeiten der Bestimmung der vorgespeicherten Öffnungsposition ermöglichen es, mögliche Einschwingvorgänge, welche beim erneuten Ändern des vorgegebenen Soll-Volumenstroms auftreten, herauszumitteln, um auf diese Weise auch bei einem noch nicht vollständig ausgeschwungenen Regelsystem eine verbesserte vorgespeicherte Öffnungsposition für das Füllventil beim nachfolgenden Füllvorgang bereitzustellen.

Bevorzugt wird die vorgespeicherte Öffnungsposition als Ausgangspunkt für einen nachfolgenden Regelvorgang festgelegt. Entsprechend wird die vorgespeicherte Öffnungsposition des Füllventils für den jeweiligen Wert des Soll-Volumenstroms zunächst angefahren und dann wird ausgehend von dieser Öffnungsposition erneut der Regelvorgang unter Berücksichtigung des gemessenen Ist-Volumenstroms durchgeführt. Damit kann durch das direkte Ansteuern der Öffnungsposition ein anfängliches Überschwingen zunächst vermieden werden und durch die nachfolgende Regelung kann, ausgehend von einer verbesserten Ausgangsposition, nämlich der vorgespeicherten Öffnungsposition aus, durchgeführt werden. Die Regelung ermöglicht noch eine weitere Verfeinerung der Öffnungsposition und kann auch sich verändernden Bedingungen, beispielsweise einer Veränderung in der Temperatur oder dem Pegel des Füllprodukts, gerecht werden.

Besonders bevorzugt wird der Regelvorgang hierbei nach dem Erreichen der vorgespeicherten Öffnungsposition erst nach einer Verzögerung begonnen. Abhängig von der Federkonstanten des Systems kann damit der nachfolgende Regelvorgang erst nach Ablauf einer vorbestimmten Zeit einsetzen, derart, dass sich an der vorgespeicherten Öffnungsposition zunächst ein konstanter Ist-Volumenstrom einstellt und das durch den Schaltvorgang zu Schwingungen angeregte System beruhigt, und erst dann ausgehend von dem sich konstant eingestellten Ist-Volumenstrom der Regelvorgang durchgeführt wird.

In einer bevorzugten Alternative wird die Öffnungsposition ausgehend von einer vorgespeicherten Öffnungsposition nur für ausgewählte Befüllvorgänge geregelt, bevorzugt nur für jeden zweiten, fünften, zehnten oder fünfzigsten Befüllvorgang. Dadurch kann ein besonders effizientes Füllverfahren erreicht werden und ein erneuter Regelvorgang für jeden einzelnen Füllvorgang ist nicht notwendig. Abhängig von der Geschwindigkeit der Veränderung der Betriebsparameter wie beispielsweise der Temperatur und der Füllhöhe des Füllprodukts vor dem Füllventil kann eine häufigere oder eine seltenere Durchführung des Regelvorganges vorgegeben werden.

Entsprechend lernt das System mit jedem Füllvorgang hinzu, so dass nach Durchführung einer endlichen Anzahl von Füllvorgängen die vorgespeicherte Öffnungsposition im Wesentlichen oder genau den vorgegebenen Wert des Soll-Volumenstroms bewirkt und auch bei Aufschalten eines nachfolgenden Regelvorganges im Prinzip keine Regelung mehr stattfindet. Entsprechend kann ein im Wesentlichen überschwingungsfreier, exakter Füllvorgang durch das Ansteuern der jeweiligen vorgespeicherten Öffnungsposition des stufenlos öffenbaren Füllventils erreicht werden.

Die jeweilige vorgespeicherte Öffnungsposition wird dabei bevorzugt über eine Rampe angesteuert, welche bevorzugt der Rampe aus dem Soll-Volumenstrom entspricht. Auf diese Weise kann der vorgegebene Soll-Volumenstrom bestmöglich nachgefahren werden, ohne dass übermäßige Regelbewegungen beziehungsweise ein Überschwingen provoziert wird.

Das vorgeschlagene Verfahren wird bevorzugt für jedes Füllventil separat durchgeführt, so dass mechanische Toleranzen in den Füllventilen sowie unterschiedliche Positionierungen und unterschiedliche Durchflusseigenschaften der individuellen Füllventile ausgeglichen werden können.

Die oben gestellte Aufgabe wird auch durch eine Vorrichtung mit den Merkmalen des Anspruchs 11 gelöst.

Entsprechend wird eine Vorrichtung zum Befüllen eines Behälters mit einem Füllprodukt vorgeschlagen, welche ein stufenlos einstellbares Füllventil, eine Vorrichtung zur Bestimmung eines Ist-Volumenstroms, sowie eine Regelung zum Regeln der Öffnungsposition des Füllventils auf Grundlage eines vorgegebenen Soll-Volumenstroms und des Ist-Volumenstroms umfasst, und weiterhin eine Steuervorrichtung umfasst. Erfindungsgemäß ist die Steuervorrichtung dazu ausgebildet und eingerichtet, das obenstehend beschriebene Verfahren durchzuführen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung eines Füllvorganges während eines vorgelagerten Füllvorgangs;
- Figur 2: eine Ausschnittvergrößerung eines Abschnitts des Füllvorgangs der Figur 1;
- Figur 3: eine schematische Darstellung eines Füllvorganges während eines nachgelagerten Füllvorgangs; und
- Figur 4: eine Ausschnittvergrößerung eines Abschnitts des Füllvorgangs der Figur 3.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

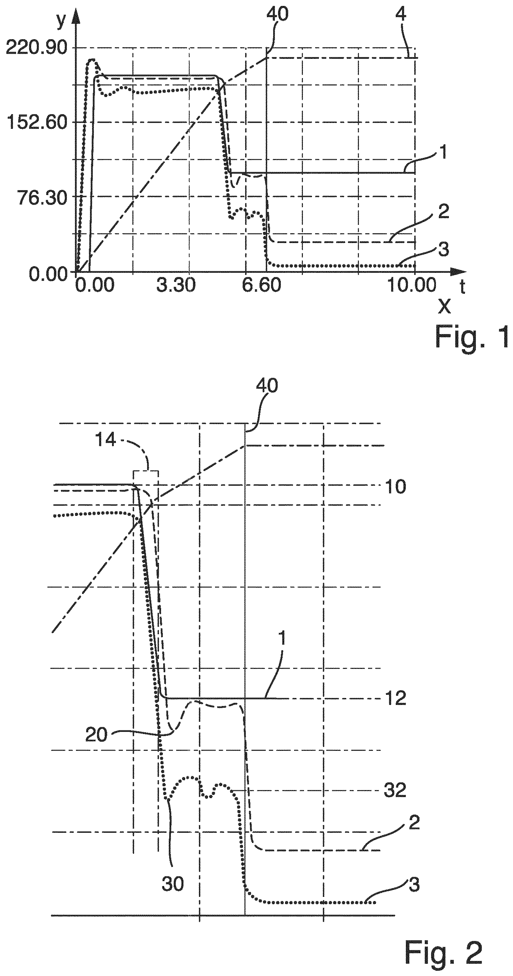

In Figur 1 sind schematisch Kurven gezeigt, bei welchen auf der X-Achse die Zeit t eines Füllvorganges dargestellt ist und auf der Y-Achse unterschiedliche Parameter abgetragen werden.

Die durchgezogene Linie stellt den vorgegebenen Soll-Volumenstrom 1 dar, welcher für den in Figur 1 schematisch gezeigten Füllvorgang vom Anlagenbetreiber für das jeweilige Füllprodukt vorgegeben ist. Der Soll-Volumenstrom 1 wird üblicherweise für jeden Behältertypen und jedes Füllprodukt vom Anlagenbetreiber anders vorgegeben, um ein produktschonendes und gleichzeitig effizientes Befüllen des Behälters zu erreichen. Bei der Festlegung des Soll-Volumenstroms 1 spielt insbesondere auch die Aufschäumneigung des Füllprodukts eine wesentliche Rolle, da bei einer höheren Aufschäumneigung zum Ende des Füllvorgangs hin bereits früher mit einem niedrigeren Volumenstrom abgefüllt werden muss, um ein Überschäumen und damit ein Überlaufen zu verhindern.

Entsprechend wird ein Soll-Volumenstrom 1 zunächst zum schnellen Befüllen des Behälters mit einem hohen Soll-Volumenstrom 10 vorgegeben, der dann zum Ende des Füllvorgangs hin auf einen niedrigeren Soll-Volumenstrom 12 herabgesetzt wird. Dabei wird berücksichtigt, dass ein Produktventil zumindest aus strömungsdynamischen Überlegungen heraus nicht schlagartig geschaltet werden sollte, um Schwingungen im Gesamtsystem nicht unnötig anzuregen. Entsprechend wird der Soll-Volumenstrom 1 von dem hohen Soll-Volumenstrom 10 auf den niedrigere Soll-Volumenstrom 12 über eine Rampe 14 geschaltet.

Die gestrichelte Kurve in den Figuren stellt den gemessenen Ist-Volumenstrom 2 des Füllprodukts durch das Füllventil hindurch dar, welcher beispielsweise mittels eines Durchflussmessers oder eines anderen Messverfahrens gemessen wird.

Über eine Regelung, die laufend den Soll-Volumenstrom 1 mit dem Ist-Volumenstrom 2 vergleicht, wird entsprechend eine Stellgröße bestimmt, mittels welcher die Öffnungsposition 3 des Füllventils geregelt wird.

Die in den Figuren gezeigte gepunktete Kurve bezeichnet die Öffnungsposition 3 des Füllventils. Wie sich aus den Figuren ergibt, ist die Öffnungsposition 3 mit dem Ist-Volumenstrom 2 korreliert, denn bei einer vorgegebenen Öffnungsposition 3 wird nach einem Einschwingvorgang ein entsprechender Ist-Volumenstrom 2 erreicht.

Über den gesamten Füllvorgang hinweg wird das gesamte in den Behälter eingeströmte Füllproduktvolumen 4 mit der Strich-Punkt-Kurve gezeigt. Das Füllproduktvolumen 4 ist entsprechend das Zeitintegral über den Ist-Volumenstrom 2 hinweg. Ein Abschalten des Füllventils wird am Abschaltzeitpunkt 40 erreicht, bei welchem das für den jeweiligen Behälter gewünschte Füllvolumen erreicht wird. Am Abschaltzeitpunkt 40 wird das Füllventil geschlossen und der Füllvorgang entsprechend beendet.

Für herkömmliche Verfahren zum Befüllen eines Behälters mit einem Füllprodukt mittels eines stufenlos öffenbaren Füllventils ist üblicherweise ein PD-Regler oder ein PID-Regler vorgesehen, welcher dann die Regelvorgänge vornimmt. Entsprechend ist der jeweilige PD- beziehungsweise PID-Regler für alle Füllventile gleich parametrisiert, wodurch nicht ganz optimale Regelergebnisse erreicht werden, da sich die einzelnen Füllventile beziehungsweise Füllstellen üblicherweise leicht voneinander unterscheiden. Damit können dann die Stellgrößen hinsichtlich des Soll-Volumenstroms 1 nicht optimal bestimmt werden und eine individuelle Anpassung an das jeweilige individuelle Füllventil beziehungsweise Füllorgan findet auf diese Weise nicht statt.

Entsprechend ergeben sich die beispielsweise aus den Figuren 1 und 2 erkennbare Überschwinger 30 in der Öffnungsposition 3 des Füllventils, die in entsprechenden Überschwingern 20 des Ist-Volumenstroms 2 resultieren. Die Überschwinger 20 des Ist-Volumenstroms 2 sind zusätzlich auch abhängig von der jeweiligen Federkonstante des Systems, welches bei Schaltvorgängen des Füllventils jeweils neu zum Schwingen angeregt wird.

Solcher Überschwinger 20, 30 treten beispielsweise auf, wenn der Soll-Volumenstrom 1 zum Ende der Befüllung hin von dem hohen Soll-Volumenstrom 10 auf den niedrigeren Soll-Volumenstrom 12 abgesenkt wird. Das Überschwingen 20, 30 tritt hier sowohl bezüglich der Öffnungsposition 3, als auch bezüglich des Ist-Volumenstroms 2 auf.

Aus den Figuren 1 und 2 ergibt sich, dass nach dem Absenken des Soll-Volumenstroms 1 auf den niedrigen Soll-Volumenstrom 12 bis zum Abschaltzeitpunkt 40 kein stabiler Zustand erreicht wird. Vielmehr schwingt der Ist-Volumenstrom 2 um den niedrigen Soll-Volumenstrom 12 herum, so dass auch die Öffnungsposition 3 des Füllventils entsprechend schwingt. Das Überschwingen 20, 30 beim Schaltvorgang des Füllventils von dem hohen Soll-Volumenstrom 10 auf den niedrigeren Soll-Volumenstrom 12 sowie das Nachschwingen bis zum Abschaltzeitpunkt 40 stammt unter anderem von einer nicht optimalen Parametrierung des PD-Reglers. Entsprechend kann in der zur Verfügung stehenden Zeit kein vollständig stabiler Regelzustand für die Öffnungsposition 3 des Füllventils bei dem niedrigeren Soll-Volumenstrom erreicht werden. Am Abschaltzeitpunkt 40 vor dem eigentlichen Schließen nimmt das Füllventil entsprechend eine Öffnungsposition 32 ein, welche für jeden einzelnen Füllvorgang variieren kann.

Die in den Figuren 1 und 2 gezeigten Kurven des Ist-Volumenstroms 2 und der Öffnungsposition 3 sind vollständig geregelte Kurven, bei welchen einem PD-Regler lediglich der Soll-Volumenstrom 1 und der Ist-Volumenstrom 2 zugeführt werden und hieraus die entsprechende Stellgröße zum Regeln der Öffnungsposition 3 bestimmt wird. Das Überschwingen 20, 30 und das Nachschwingen ergibt sich unter anderem aus der nicht für den jeweiligen Anwendungsfall optimierten Parametrierung der Regelung.

Um das Erreichen eines eingeschwungenen Zustands zu fördern und damit eine Reduzierung des Überschwingens und Nachschwingens des Ist-Volumenstroms 2 und der Öffnungsposition 3 zu erreichen, wird vorgeschlagen bei einem Regelvorgang, wie dem in den Figuren 1 und 2 gezeigten, die Öffnungsposition 32 zum Abschaltzeitpunkt 40 als vorgespeicherte Öffnungsposition 32 für den dazu korrelierenden niedrigeren Soll-Volumenstrom 12 für einen nachfolgenden Füllvorgang zu speichern.

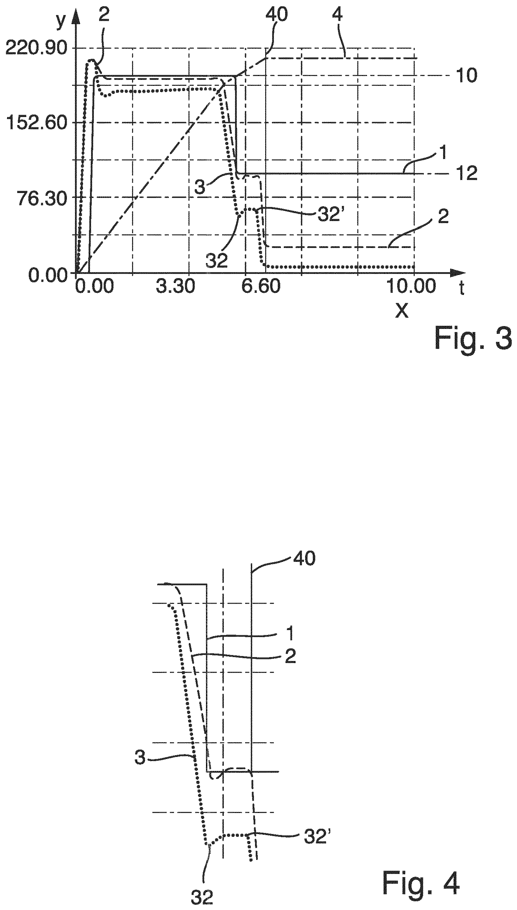

Bei einem nachfolgenden Füllvorgang, so wie er beispielsweise in den Figuren 3 und 4 gezeigt ist, wird die vorgespeicherte Öffnungsposition 32 dann direkt für den vorgegebenen niedrigeren Soll-Volumenstrom 12 angefahren, so dass die vorgespeicherte Öffnungsposition 32 als Ausgangsposition für den weiteren Regelungsprozess bei dem niedrigeren Soll-Volumenstrom 12 eingenommen wird. Entsprechend kann das in den Figuren 1 und 2 gezeigte übermäßige Überschwingen 20, 30 der Öffnungsposition 3 und des Ist-Volumenstroms 2 verringert werden, da bei dem vorgegebenen Soll-Volumenstrom 12 gleich die vorgespeicherte Öffnungsposition 32 angesteuert wird.

Danach wird der Regelungsvorgang wie bisher fortgesetzt, derart, dass ausgehend von der vorgespeicherten Öffnungsposition 32 die Öffnungsposition 3 wieder anhand des mittels des Durchflussmessers detektierten Ist-Volumenstroms 2 auf den über den Soll-Volumenstrom 1 vorgegebenen niedrigeren Soll-Volumenstrom 12 ausgeregelt wird.

Wie sich beispielsweise aus Figur 4 ergibt, wird zum Abschaltzeitpunkt 40 hier bereits im zweiten Durchgang ein quasi statisches Niveau für die Öffnungsposition 3 erreicht, welche dann wiederum als neue vorgespeicherte Öffnungsposition 32' für den darauffolgenden Füllvorgang gespeichert wird. Entsprechend kann in dem gezeigten Ausführungsbeispiel bereits nach zwei Durchgängen ein quasi stabiler Zustand beziehungsweise eine quasi stabile Öffnungsposition 3 für einen über den Soll-Volumenstrom 1 vorgegebenen niedrigeren Soll-Volumenstrom 12 erreicht werden.

Diese neue vorgespeicherte Öffnungsposition 32' wird im nächsten Füllvorgang wieder als erstes angefahren, um den vorgegebenen niedrigeren Soll-Volumenstrom 12 zu erreichen. Wenn sich die Rahmenbedingungen, beispielsweise der Druck des Füllprodukts im Füllventil, zwischen den beiden Füllvorgängen nicht oder nicht signifikant geändert hat, ist es möglich, dass bereits durch diese zweite vorgespeicherte Öffnungsposition 32' sofort der vorgegebene niedrigere Soll-Volumenstrom 12 als Ist-Volumenstrom 2 erreicht wird.

Das vorbeschriebene Verfahren kann für jede gewünschte Veränderung des Soll-Volumenstroms 1 verwendet werden, nicht nur für die Verringerung des hohen Soll-Volumenstroms 10 zu dem niedrigeren Soll-Volumenstrom 12. Hierzu wird die von dem Regler jeweils vor Veränderung vorliegende Öffnungsposition für diesen Soll-Volumenstrom gespeichert und bei einem nachfolgenden Füllvorgang jeweils direkt als Ausgangspunkt für die nachfolgende Regelung angefahren.

Entsprechend kann nach der Speicherung der Öffnungsposition 32', bei gleichen Rahmenbedingungen, keine weitere oder keine signifikante weitere Regelung mehr stattfinden, so dass der Regelungsvorgang schnell und einfach ist. Ändern sich jedoch die Rahmenbedingungen, so findet eine erneute Regelung statt, derart, dass beim darauffolgenden Füllvorgang wiederum eine optimierte Ausgangsposition mittels der dann vorgespeicherten Öffnungsposition angefahren werden kann.

Bei einer Kurve des Soll-Volumenstroms 1, die in einem Füllvorgang mehrfach die gleichen Werte des Soll-Volumenstroms erreicht, kann die jeweils beim vorherigen Erreichen des Werts gespeicherte Öffnungsposition beim nachfolgend gewünschten Erreichen des Werts als Ausgangswert verwendet werden.

Die vorgespeicherte Öffnungsposition 32, 32' für den vorgegebenen Soll-Volumenstrom 1, welche in dem bezüglich der Figuren 1 und 2 gezeigten Ausführungsbeispiel zum Abschaltzeitpunkt 40 erreicht wird beziehungsweise in welchem eine Änderung des vorgegebenen Soll-Volumenstroms eintritt, kann auch auf andere Weise bestimmt werden.

Insbesondere ist es hier auch möglich, einen Mittelwert der Öffnungsposition 1 entweder über ein vorgegebenes Zeitfenster, beispielsweise die letzte Sekunde vor der Veränderung des Soll-Volumenstroms 1, oder über den gesamten Abschnitt, ausgehend von der Änderung des Soll-Volumenstroms 1 hin zu einer erneuten Änderung des Soll-Volumenstroms 1, zu bilden. Bei der Mittelwertbildung können beispielsweise die Schwingungsprozesse beziehungsweise Ausschwingprozesse, welche besonders in Figur 2 deutlich zu erkennen sind, besser ausgeglichen werden, so dass die dann auf diese Weise bestimmte vorgespeicherte Öffnungsposition den vorbestimmten Soll-Volumenstrom 12 noch besser treffen kann, als eine einfache Bestimmung der Öffnungsposition 32 beim Erreichen des Abschaltzeitpunkts 40.

Weiterhin kann der auf das Erreichen der vorgespeicherten Öffnungsposition 32, 32' folgende Regelvorgang entweder sofort nach dem Erreichen der vorgespeicherten Öffnungsposition, oder aber erst nach einer bestimmten Verzögerung nach dem Erreichen der vorbestimmten Öffnungsposition 32, 32' gestartet werden. Je nach den Federkonstanten des Systems kann es hier sinnvoll sein, zunächst die vorgespeicherte Öffnungsposition 32, 32' zu erreichen, dann eine Beruhigung des Systems abzuwarten und erst dann mit dem weiteren Regelvorgang zu beginnen. Hier kann beispielsweise nach dem Erreichen der vorgespeicherten Öffnungsposition 32, 32' eine Zeitverzögerung von 100 Millisekunden bis 500 Millisekunden vorgesehen sein, nach welcher der Regelungsvorgang über einen PD-Regler oder PID-Regler wieder einsetzt.

Die Geschwindigkeit des Anfahrens der vorgespeicherten Öffnungsposition 32, 32' aus der vorherigen Öffnungsposition 1 ergibt sich bevorzugt aus der über den Soll-Volumenstrom 1 vorgegebenen Rampe 14. Hier ist, wie beispielsweise in Figur 2 schematisch gezeigt, eine Rampe 14 für die Änderung der Öffnungsposition 3 von dem hohen Soll-Volumenstrom 10 zu dem niedrigeren Soll-Volumenstrom 12 vorgegeben, welche dann auch als Vorgabe der Bewegung des Füllventils in die vorgespeicherte Öffnungsposition 32, 32' verwendet wird.

Auf diese Weise ist es weiterhin möglich, für jedes individuelle Füllventil einer Füllanlage ein optimiertes Anfahren von Öffnungspositionen zu ermöglichen, unabhängig von dem ursprünglich vorgegebenen Parametersatz einer PD- beziehungsweise PID-Regelung.

Bezüglich des Soll-Volumenstroms 1 ist anzumerken, dass es zu den gezeigten Überschwingern 20, 30 mit herkömmlichen PD- beziehungsweise PID-Regelungen insbesondere dann kommt, wenn steile Rampen gefahren müssen werden, so wie sich aus den Figuren 1 und 2 auch unmittelbar ergibt. Auf diese jeweiligen steilen Rampen folgen im üblichen Füllbetrieb meist Plateaus, in welchen der Soll-Volumenstrom 1 konstant gehalten werden soll. Die am Ende des jeweiligen Plateaus des Soll-Volumenstroms 1 erreichte Öffnungsposition 3 des Füllventils ist die, welche optimalerweise bereits zu Beginn des Regelungsprozesses, also zu Beginn des jeweiligen Plateaus, hätte erreicht werden sollen. Entsprechend kann diese zum Ende des jeweiligen Plateaus eingenommene Öffnungsposition 3 dann als vorgespeicherte Öffnungsposition 32, 32', quasi als *"Erfahrungswert",* für den nachfolgenden Füllvorgang verwendet werden.

Hat das System entsprechend die unterschiedlichen Öffnungspositionen 32, 32' für alle Soll-Volumenströme 1 gelernt, kann der gesamte Füllvorgang auch lediglich über ein Anfahren der jeweils vorgespeicherten Öffnungsposition 32, 32' ohne nachfolgendes Regeln durchgeführt werden.

Weiterhin ist es möglich, die nachfolgende Regelung nicht bei jedem Füllvorgang, sondern nur beispielsweise bei jedem zweiten, dritten, zehnten, fünfzigsten etc. Füllvorgang durchzuführen, und die übrige Zeit den Füllvorgang lediglich durch ein Anfahren der vorgespeicherten Öffnungspositionen 32, 32' durchzuführen.

Um das genannte Verfahren ausführen zu können, ist bevorzugt eine Vorrichtung mit einem stufenlos verstellbaren Füllventil vorgesehen, welches mittels eines entsprechenden Stellmotors in die jeweils vorgegebene Öffnungsposition 3 verfahrbar ist. Mittels einer an sich bekannten Regelung, beispielsweise einer PID-Regelung oder einer PD-Regelung, kann nach einem vorgegebenen Soll-Volumenstrom 1 die Öffnungsposition 3 des Füllventils anhand eines mit der Regelung verbundenen Durchflussmessers eingeregelt werden. Entsprechend wird die Öffnungsposition 3 des Füllventils so ausgeregelt, dass der vorgegebene Soll-Volumenstrom 1 möglichst schnell erreicht wird.

Zusätzlich ist eine Steuervorrichtung vorgesehen, welche dazu ausgebildet und eingerichtet ist, jeweils für einen vorgegebenen Soll-Volumenstrom 1 eine Öffnungsposition 32, 32' des Füllventils für den nächsten Fülldurchgang oder ein nachfolgendes Erreichen eines Werts des vorherigen Soll-Volumenstroms 1 zu speichern. Insbesondere wird hier eine Öffnungsposition 32, 32' des Füllventils gespeichert, welche in einem möglichst weit ausgeschwungenen Zustand der Regelung für den jeweiligen vorgegebenen Soll-Volumenstrom 1 erreicht wird. Dies ist beispielsweise zum Ende eines Plateaus des Soll-Volumenstroms 1 der Fall, wobei die vorgespeicherte Öffnungsposition 32, 32' auch aus dem Regelverlauf und den entsprechend eingenommenen Öffnungspositionen 3 heraus berechnet werden kann.

Mittels der Steuervorrichtung kann dann beim nächsten Füllvorgang für den jeweiligen vorgegebenen Wert des Soll-Volumenstroms 1 die entsprechend vorgespeicherte Öffnungsposition 32, 32' angefahren werden, um entweder den Füllvorgang mit dieser vorgespeicherten Öffnungsposition 32, 32' durchzuführen, oder aber einen Startpunkt für einen neuen Regelungsvorgang bereitzustellen.

Die entsprechende Steuervorrichtung ist bevorzugt so eingerichtet, dass sie zum einen das oben beschriebene Verfahren ausführen kann, und zum anderen jedes Füllventil separat antreiben kann, derart, dass für jedes individuelle Füllventil einer Füllanlage ein optimierter Füllvorgang bereitgestellt werden kann.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Soll-Volumenstrom
- 10: hoher Soll-Volumenstrom
- 12: niedrigerer Soll-Volumenstrom
- 14: Rampe
- 2: Ist-Volumenstrom
- 20: Überschwinger
- 3: Öffnungsposition
- 30: Überschwinger
- 32, 32': vorgespeicherte Öffnungsposition
- 4: Füllproduktvolumen
- 40: Abschaltzeitpunkt

## Patentansprüche

1. Verfahren zum Befüllen eines Behälters mit einem Füllprodukt mittels eines stufenlos verstellbaren Füllventils und einer Vorrichtung zum Bestimmen eines Ist-Volumenstroms (2), wobei ein Soll-Volumenstrom (1) vorgegeben ist,
**dadurch gekennzeichnet, dass**
für einen vorgegebene Wert des Soll-Volumenstroms (12) eine vorgespeicherte Öffnungsposition (32, 32') des Füllventils angesteuert wird, wobei die vorgespeicherte Öffnungsposition (32, 32') durch einen vorhergehenden Regelungsvorgang für den vorgegebenen Soll-Volumenstrom (12) ermittelt wurde.

2. Verfahren gemäß Anspruch 1, **dadurch gekennzeichnet, dass** als vorgespeicherte Öffnungsposition (32, 32') die Öffnungsposition (3) gespeichert wird, welche im vorherigen Regelungsvorgang vor einer Veränderung des Werts des Soll-Volumenstroms (1) erreicht wurde, bevorzugt kurz vor einer Veränderung.

3. Verfahren gemäß Anspruch 1 oder 2, **dadurch gekennzeichnet, dass** die vorgespeicherte Öffnungsposition (32, 32') als Mittelwert der Öffnungspositionen (3) für einen vorgegebenen Soll-Volumenstrom (1) bestimmt wird.

4. Verfahren gemäß Anspruch 3, **dadurch gekennzeichnet, dass** der Mittelwert über einen vorgegebenen Abschnitt des Soll-Volumenstroms (1), insbesondere einen vorgegebenen Zeitabschnitt, berechnet wird.

5. Verfahren gemäß einem der vorstehenden Ansprüche, **dadurch gekennzeichnet, dass** die vorgespeicherte Öffnungsposition (32, 32') als Ausgangspunkt für einen nachfolgenden Regelvorgang festgelegt wird.

6. Verfahren gemäß Anspruch 5, **dadurch gekennzeichnet, dass** der Regelvorgang nach dem Erreichen der vorgespeicherten Öffnungsposition (32, 32') erst nach einer Verzögerung begonnen wird.

7. Verfahren gemäß einem der vorstehenden Ansprüche, **dadurch gekennzeichnet, dass** die Öffnungsposition (3) ausgehend von einer vorgespeicherten Öffnungsposition (32, 32') für jeden Befüllvorgang geregelt wird.

8. Verfahren gemäß einem der Ansprüche 1 bis 6, **dadurch gekennzeichnet, dass** die Öffnungsposition (3) ausgehend von einer vorgespeicherten Öffnungsposition (32, 32') nur für ausgewählte Befüllvorgänge geregelt wird, bevorzugt für jeden zweiten, fünften, zehnten oder fünfzigsten Befüllvorgang geregelt wird.

9. Verfahren gemäß einem der vorstehenden Ansprüche, **dadurch gekennzeichnet, dass** die vorgespeicherte Öffnungsposition (32, 32') über eine Rampe (14) angefahren wird.

10. Verfahren gemäß einem der vorstehenden Ansprüche, **dadurch gekennzeichnet, dass** jedes Füllventil einer Getränkeabfüllanlage individuell angesteuert wird.

11. Vorrichtung zum Befüllen eines Behälters mit einem Füllprodukt, umfassend ein stufenlos einstellbares Füllventil, eine Vorrichtung zur Bestimmung eines Ist-Volumenstroms (2), sowie eine Regelung zum Regeln der Öffnungsposition (3) des Füllventils auf Grundlage eines vorgegebenen Soll-Volumenstroms (1) und des Ist-Volumenstroms (2), weiterhin umfassend eine Steuervorrichtung,
**dadurch gekennzeichnet, dass**
die Steuervorrichtung dazu ausgebildet und eingerichtet ist, das in einem der vorstehenden Ansprüche beschriebene Verfahren durchzuführen.

## Claims

1. Method for filling a container with a fill product by means of a filler valve which can be opened steplessly and a device for determining an actual volume flow (2), wherein a required volume flow (1) is specified,
**characterized in that**
for a specified value of the required volume flow (12) the filler valve is controlled to adopt a pre-stored open position (32, 32'), wherein the pre-stored open position (32, 32') was determined by a prior control process for the specified required volume flow (12).

2. Method according to claim 1, **characterized in that** the open position (3) that is stored as the pre-stored open position (32, 32') is that which was reached in the previous control process prior to a change in the value of the required volume flow (1), preferably shortly prior to a change.

3. Method according to claim 1 or 2, **characterized in that** the pre-stored open position (32, 32') is determined as the mean value of the open positions (3) for a specified required volume flow (1).

4. Method according to claim 3, **characterized in that** the mean value is calculated over a specified segment of the required volume flow (1), in particular a specified time segment.

5. Method according to one of the previous claims, **characterized in that** the pre-stored open position (32, 32') is set as the starting point for a subsequent control process.

6. Method according to claim 5, **characterized in that** the control process is begun only following a delay after the pre-stored open position (32, 32') is reached.

7. Method according to one of the previous claims, **characterized in that** the open position (3) is controlled based on a pre-stored open position (32, 32') for every filling process.

8. Method according to one of claims 1 to 6, **characterized in that** the open position (3) is controlled based on a pre-stored open position (32, 32') only for selected filling processes, preferably for every second, fifth, tenth or fiftieth filling process.

9. Method according to one of the previous claims, **characterized in that** the pre-stored open position (32, 32') is adopted via a ramp (14).

10. Method according to one of the previous claims, **characterized in that** every filler valve of a beverage filling plant is individually controlled.

11. Device for filling a container with a fill product, comprising a filler valve which can be adjusted steplessly, a device for determining an actual volume flow (2), and a controller for controlling the open position (3) of the filler valve based on a specified required volume flow (1) and the actual volume flow (2), further comprising a control device,
**characterized in that**
the control device is designed and configured to carry out the method described in one of the previous claims.

## Revendications

1. Procédé de remplissage d'un récipient avec un produit de remplissage au moyen d'une soupape de remplissage réglable en continu et d'un dispositif de détermination d'un débit volumique réel (2), un débit volumique de consigne (1) étant prédéfini,
**caractérisé en ce que**
pour une valeur prédéfinie du débit volumique de consigne (12), une position d'ouverture préenregistrée (32, 32') de la soupape de remplissage est commandée, la position d'ouverture préenregistrée (32, 32') ayant été déterminée par une opération de régulation précédente pour le débit volumique de consigne prédéfini (12).

2. Procédé selon la revendication 1, **caractérisé en ce que** la position d'ouverture (3) qui a été atteinte dans l'opération de régulation précédente avant une modification de la valeur du débit volumique de consigne (1), de préférence juste avant une modification, est enregistrée en tant que position d'ouverture préenregistrée (32, 32').

3. Procédé selon la revendication 1 ou 2, **caractérisé en ce que** la position d'ouverture préenregistrée (32, 32') est déterminée en tant que valeur moyenne des positions d'ouverture (3) pour un débit volumique de consigne prédéfini (1).

4. Procédé selon la revendication 3, **caractérisé en ce que** la valeur moyenne est calculée sur une section prédéfinie du débit volumique de consigne (1), en particulier une section de temps prédéfinie.

5. Procédé selon l'une quelconque des revendications précédentes, **caractérisé en ce que** la position d'ouverture préenregistrée (32, 32') est fixée en tant que point de départ pour une opération de régulation suivante.

6. Procédé selon la revendication 5, **caractérisé en ce que** l'opération de régulation après l'atteinte de la position d'ouverture préenregistrée (32, 32') n'est commencée qu'après un retard.

7. Procédé selon l'une quelconque des revendications précédentes, **caractérisé en ce que** la position d'ouverture (3) est régulée à partir d'une position d'ouverture préenregistrée (32, 32') pour chaque opération de remplissage.

8. Procédé selon l'une quelconque des revendications 1 à 6, **caractérisé en ce que** la position d'ouverture (3) est régulée à partir d'une position d'ouverture préenregistrée (32, 32') uniquement pour des opérations de remplissage sélectionnées, de préférence est régulée pour chaque deuxième, cinquième, dixième ou cinquantième opération de remplissage.

9. Procédé selon l'une quelconque des revendications précédentes, **caractérisé en ce que** la position d'ouverture préenregistrée (32, 32') est approchée par le biais d'une rampe (14).

10. Procédé selon l'une quelconque des revendications précédentes, **caractérisé en ce que** chaque soupape de remplissage d'une installation de remplissage de boissons est commandée individuellement.

11. Dispositif de remplissage d'un récipient avec un produit de remplissage, comprenant une soupape de remplissage réglable en continu, un dispositif de détermination d'un débit volumique réel (2), ainsi qu'une régulation pour réguler la position d'ouverture (3) de la soupape de remplissage sur la base d'un débit volumique de consigne prédéfini (1) et du débit volumique réel (2), comprenant en outre un dispositif de commande,
**caractérisé en ce que**
le dispositif de commande est réalisé et conçu pour mettre en oeuvre le procédé décrit dans l'une quelconque des revendications précédentes.
